# EUROPÄISCHE PATENTSCHRIFT

(11) **EP 3 102 454 B1**
(45) Veröffentlichungstag und Bekanntmachung des Hinweises auf die Patenterteilung: **14.12.2022**
(21) Anmeldenummer: 15705769.6
(22) Anmeldetag: 04.02.2015
(51) Int. Cl.: B60L 50/50, B60L 50/64, B60L 58/21, B60R 21/01, H01H 50/20, B60L 3/04, B60R 16/03, B60K 28/14, H01H 39/00, B60L 3/00

(54) **HOCHVOLTBORDNETZ EINES KRAFTFAHRZEUGS**
HIGH-VOLTAGE MOTOR VEHICLE ELECTRIC SYSTEM
RÉSEAU DE BORD À HAUTE TENSION D'UN VÉHICULE AUTOMOBILE

(30) Priorität: 08.02.2014 DE 102014001708; 16.04.2014 DE 202014003287 U
(43) Veröffentlichungstag der Anmeldung: 14.12.2016
(73) Patentinhaber: Ellenberger & Poensgen GmbH, 90518 Altdorf (DE)
(72) Erfinder: GROSS, Patric, 90602 Pyrbaum (DE); PIMENTA, Ricardo, 90542 Eckental (DE); BIRNER, Markus, 90513 Zirndorf (DE); ENGEWALD, Manuel, 90411 Nürnberg (DE); MIKLIS, Markus, 90592 Pfeifferhütte (DE); MECKLER, Peter, 91224 Hohenstadt/Pommelsbrunn (DE); SCHNEIDER, Ewald, 91238 Offenhausen (DE); GOTTSCHALK, Klaus, 90518 Altdorf (DE)
(74) Vertreter: FDST Patentanwälte
(86) Internationale Anmeldenummer: PCT/EP2015/000221
(87) Internationale Veröffentlichungsnummer: WO 2015/117755

(56) Entgegenhaltungen:
- EP-A1- 2 243 668
- WO-A1-2010/061576
- DE-A1- 19 712 544
- DE-A1- 19 712 544
- DE-A1-102008 047 502
- JP-A- H10 302 584
- JP-A- 2007 213 842
- US-A1- 2012 018 404

## Beschreibung

Die Erfindung betrifft einen Schnellabschalter.

Kraftfahrzeuge werden zunehmend mittels eines Elektromotors angetrieben. Hierbei wird zwischen reinen Elektrofahrzeugen und Hybridfahrzeugen unterschieden. Bei Hybridfahrzeugen ist zusätzlich zu dem Elektromotor auch ein Verbrennungsmotor vorhanden, mittels dessen die für den Betrieb des Elektromotors benötigte elektrische Energie erzeugt wird. Der Elektromotor ist üblicherweise Bestandteil eines Verbrauchernetzes, das mit einer vergleichsweise hohen elektrischen Spannung, z. B. 450 V betrieben wird. Von einer Hochvolt-Batterie wird eine elektrische Spannung bereitgestellt, die mittels einer elektrischen Leitung an einen Umrichter zum Betrieb des Elektromotors abgegeben wird. Üblicherweise weist die elektrische Leitung ein Relais auf, mittels dessen die Bestromung gestartet bzw. gestoppt werden kann. Dieses Relais ist beispielsweise mit einem Zündschloss oder dergleichen verbunden, so dass bei einem Abstellen des Kraftfahrzeugs der Umrichter und der Elektromotor stromlos sind.

Im Falle eines Unfalls ist es erforderlich, die Hochvolt-Batterie vergleichsweise schnell und sicher von dem Verbrauchernetz zu trennen. Anderenfalls können aufgrund von Beschädigungen innerhalb des Verbrauchernetzes und/oder der elektrischen Verbindung Kurzschlüsse entstehen, die wiederum zu Entfachung eines Brandes beitragen können. Auch kann die Hochvolt-Batterie selbst überlastet werden und somit explodieren. Ebenso ist es möglich, dass Teile des Kraftfahrzeugs nach einem Unfall unter einer elektrischen Spannung stehen, was eine Bergung von sich innerhalb des Kraftfahrzeugs befindenden Insassen erschwert. Mittels des vorhandenen Relais ist eine derartige schnelle Abschaltung aufgrund der Trägheit des Relais nicht möglich. Zudem kann es vorkommen, dass die Relaiskontakte des Relais aufgrund eines bereits eingetretenen Überstroms miteinander verschmolzen sind, und somit auch bei einer geeigneten Ansteuerung des Relais sich nicht voneinander trennen und somit den Stromfluss unterbrechen. Ferner muss das Hochvolt-Bordnetz auf einen Unfall hin überwacht werden. Dies erfolgt beispielsweise mittels einer Überwachung des Verbrauchernetzes auf einen Kurzschluss. Sobald ein derartiger Kurzschluss detektiert wurde, wird die Hochvolt-Batterie vom Verbrauchernetz getrennt. Nachteilig hierbei ist, dass der Kurzschluss bereits eingetreten ist und ein etwaiger Brand bereits entstanden sein kann.

Aus DE 197 12 544 A1 ist ein Hochvoltbordnetz eines Kraftfahrzeugs bekannt. Dieses weist eine Hochvoltbatterie und ein Verbrauchernetzwerk auf, die mittels einer elektrischen Leitung miteinander verbunden sind. Auch ist ein Stromkreisunterbrecher vorgesehen, der mit einem Airbag-Auslösesignal beaufschlagt ist. Aus WO 2010/061576 A1 ist ein Schnellabschalter bekannt.

Der Erfindung liegt die Aufgabe zugrunde, eine besonders geeignete Trennung einer Hochvolt-Batterie von einem Verbrauchernetz zu ermöglichen, die bei einem Unfall insbesondere vergleichsweise schnell und sicher auslöst und vorteilhafterweise galvanisch ist.

Hinsichtlich eines Schnellabschalters wird diese Aufgabe durch die Merkmale des Anspruchs 1 gelöst.

Nachfolgend wird ein Ausführungsbeispiel der Erfindung anhand einer Zeichnung näher erläutert. Darin zeigen:
- Fig. 1: schematisch ein Hochvolt-Bordnetz eines Kraftfahrzeugs mit einem Schnellabschalter,
- Fig. 2: schematisch das Hochvolt-Bordnetz mit zwei Schnellabschaltern,
- Fig. 3a, 3b: perspektivisch den Schnellabschalter,
- Fig. 4a bis 4c: weitere Ausführungsformen des Hochvolt-Bordnetzes mit einer den Schnellabschalter aufweisenden Kurzschlussbrücke, und
- Fig. 5: schematisch eine weitere Ausführungsform des HochvoltBordnetzes.

Einander entsprechende Teile und Größen sind in allen Figuren stets mit gleichen Bezugszeichen versehen.

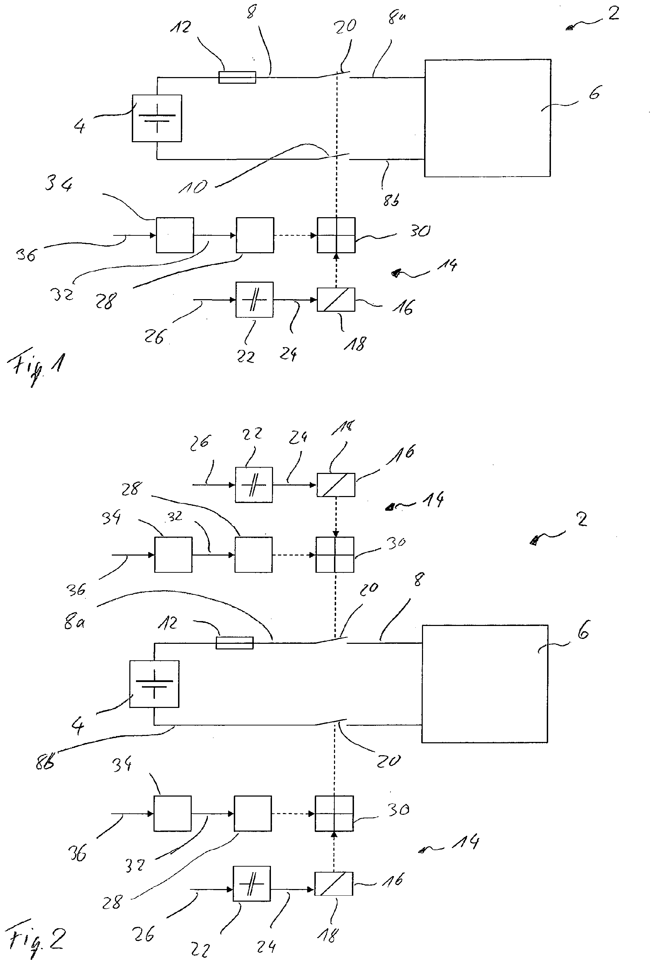

In Fig. 1 ist schematisch ein Hochvolt-Bordnetz 2 eines Kraftfahrzeugs dargestellt. Das Hochvolt-Bordnetz 2 umfasst eine Hochvolt-Batterie 4 und ein Verbrauchernetz 6. Mittels der Hochvolt-Batterie 4 ist eine elektrische Gleichspannung von 450 V zur Verfügung gestellt, die über eine elektrische Leitung 8 mit zwei elektrischen Leitern 8a, 8b in das Verbrauchernetz 6 eingespeist wird. Hierbei ist einer der elektrischen Leiter 8a mit dem Pluspol der Hochvolt-Batterie 4 und der verbleibende elektrische Leiter 8b mit dem Minuspol der Hochvolt-Batterie 4 elektrisch kontaktiert. Das Verbrauchernetz 6 weist einen nicht dargestellten Umrichter auf, mittels dessen die Gleichspannung transformiert wird. Mittels der transformierten Spannung wird ein Elektromotor betrieben, der das Kraftfahrzeug antreibt, das das Hochvolt-Bordnetz 2 aufweist.

Der mit dem Minuspol der Hochvolt-Batterie 4 elektrisch kontaktierte Leiter 8b weist ein Relais 10 auf, das in nicht näher bezeichneter Art und Weise mittels einer Zündung (Zündschalter) oder eines Gaspedals des Kraftfahrzeugs betätigt wird. Der mit dem Pluspol elektrisch kontaktierte elektrische Leiter 8a umfasst einen Überstromschutz 12, der als eine Schmelzsicherung ausgeführt ist, und einen Schnellabschalter 14. Der Schnellabschalter 14 umfasst ein Relais 16 mit einem magnetischen Antrieb 18, der auf zwei Relaiskontakte 20 wirkt. Der magnetische Antrieb 18 wird mittels eines Relaisantriebs 22 gesteuert, der mit dem magnetischen Antrieb 18 mittels einer Steuerleitung 24 verbunden ist. Hierfür werden von dem Relaisantrieb 22 Steuersignale 26 erfasst, die mittels der Zündung des Kraftfahrzeugs 2 erstellt werden, insbesondere mittels eines Zündschlüssels oder dergleichen. Bei einem Ausbleiben der Steuersignale 26 sind die Relaiskontakte 20 geöffnet. Mit anderen Worten ist das Relais 16 stromlos geöffnet.

Der Schnellabschalter 14 umfasst ferner einen Zusatzantrieb 28, der mit dem magnetischen Antrieb 18 über eine Kupplung 30 mechanisch gekoppelt sind. Der Zusatzantrieb 28 weist eine Ansteuerleitung 32 auf, die mit einer Steuerung 34 verbunden ist. Die Steuerung 34 ist mit einem Bus-System verbunden und überwacht dieses auf ein Airbag-Signal 36. Der Zusatzantrieb 28 ist eine pyrotechnische Zündladung. Im Normalbetrieb des Kraftfahrzeugs werden die Relais 10, 16 mittels der von dem Gaspedal oder dem Zündschlüssel des Kraftfahrzeugs erstellten Steuersignale 26 gesteuert. Im Falle eines Unfalls des Kraftfahrzeugs wird das Airbag-Signal 36 erzeugt, in Folge dessen ein Airbag des Kraftfahrzeugs gezündet wird. Zusätzlich wird von der Steuerung 34 das Airbag-Signal 36 erfasst und über die Ansteuerleitung 32 an den Zusatzantrieb 28 weitergeleitet, der in Folge dessen auslöst. Über die Kupplung 30 wirkt der Zusatzantrieb 28 auf die Relaiskontakte 20 und bewirkt eine Öffnung von diesen. Folglich ist das Verbrauchernetz galvanisch von der Hochvolt-Batterie 4 getrennt und eine Beschädigung oder Entzündung von Komponenten des Verbrauchernetzes 6 wird verhindert.

In Fig. 2 ist eine weitere Ausgestaltung des Hochvolt-Bordnetzes 2 dargestellt. Im Vergleich zu der in Fig. 1 gezeigten Variante des Hochvolt-Bordnetzes 2 ist das Relais 10, das in den mit dem Minuspol der Hochvolt-Batterie 4 elektrisch kontaktierten Leiter 8b eingebracht ist, durch den Schnellabschalter 14 ersetzt. Im Normalbetrieb des Hochvolt-Bordnetzes 2 ergeben sich folglich keine Unterschiede, da das Relais 16 des zweiten Schnellabschalters 14 die Funktionen des ersetzten Relais 10 wahrnimmt. Bei einem Unfall des Kraftfahrzeugs und einem Vorhandensein des Airbag-Signals 36 und einem Auslösen der beiden vorhandene Zusatzantriebe 28 jedoch wird zusätzlich zu dem mit dem Pluspol der Hochvolt-Batterie 4 verbundene Leiter 8a auch der mit dem Minuspol der Hochvolt-Batterie 4 verbundene Leiter 8b mittels der Relaiskontakte 20 getrennt und somit auch bei einer ungewollten Überbrückung des mit dem Pluspol verbundenen elektrischen Leiters 8a die Hochvolt-Batterie 4 sicher von dem Verbrauchernetz 6 getrennt.

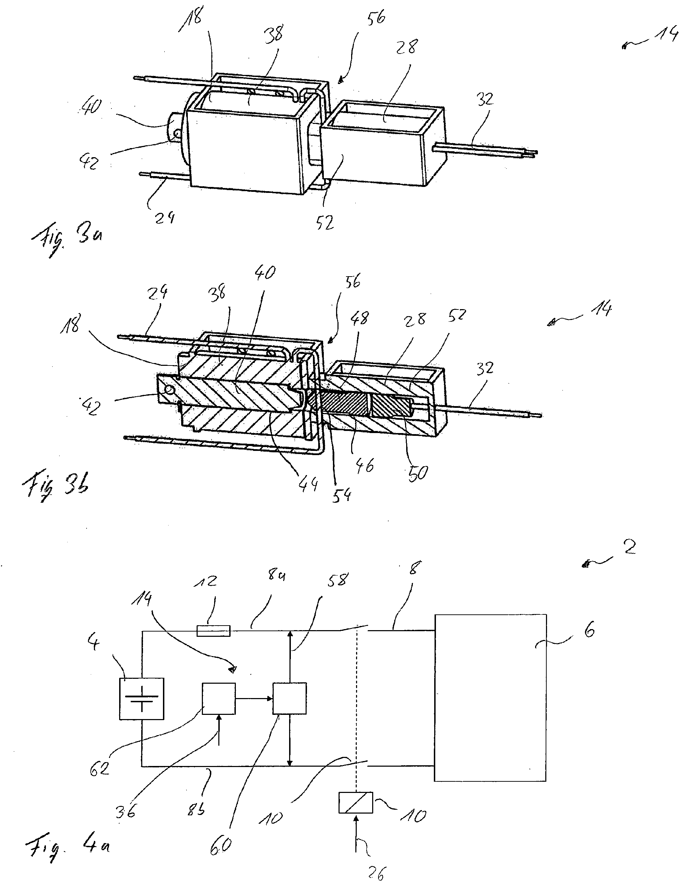

In Fig. 3a ist perspektivisch und in Fig. 3b perspektivisch in einer Schnittdarstellung eine Ausführungsform des Schnellabschalters 14 gezeigt. Der magnetische Antrieb 18 weist eine elektrische Spule 38 auf, deren elektrische Anschlüsse in die Steuerleitung 24 münden. Innerhalb der Spule 38 ist ein Schlaganker 40 aus einem magnetischen Material mit einer magnetischen Vorzugsrichtung positioniert. Der im Wesentlichen zylinderförmige Schlaganker 40 weist an einem Freiende ein Loch 42 auf, das über ein nicht gezeigtes Gestänge mit den Relaiskontakten 20 in Wirkverbindung steht. Je nach Position des Lochs 42 bezüglich der Spule 38 sind die Relaiskontakte 20 geöffnet oder geschlossen. Fluchtend mit einer Führung 44 des Schlagankers 40 ist eine Führung 46 eines Stempels 48 des Zusatzantriebs 28. Der Stempel 48 besteht aus einem vergleichsweise widerstandsfähigen Material, z.B. Stahl. Mittels des Stempels 48 ist eine Bewegung des Schlagankers 40 in die dem Loch 42 entgegen gesetzte Richtung begrenzt. Auf der dem Schlaganker 40 gegenüber liegenden Seite des Stempels 48 ist eine pyrotechnische Treibladung 50 innerhalb eines die Führung 46 aufweisenden Gehäuses 52 positioniert. Hierbei ist die Treibladung 50 mittels des Gehäuses 52 und des Stempels 48 vollumfänglich umschlossen, und die Ansteuerleitung 32 des Zusatzantriebs 28 endet innerhalb der Treibladung 50.

Der Stempel 48 weist eine Bohrung 54 auf, die senkrecht zur Führung 46 des Stempels 48 verläuft. Durch die Bohrung 54 verläuft einer der Leiter der Steuerleitung 24 des magnetischen Antriebs 18, der in dem den Stempel 48 umgebenden Bereich fest mit dem Gehäuse 52 des Zusatzantriebs 28 verbunden ist. Der Stempel 48 in Verbindung sowohl mit dem Festhalten des Leiters der Ansteuerleitung 24 aus auch mit den relativ scharf kantigen Übergängen bildet ein Trennelement 56 zur Durchtrennung der Steuerleitung 24.

Wenn das Airbag-Signal 36 auftritt, entsteht ein Funke zwischen den Enden der Ansteuerleitung 32, der die pyrotechnische Treibladung 50 auslöst. Aufgrund der kammerartigen Ausbildung des Raumes, innerhalb derer sich die Treibladung 50 befindet, wird der Stempel 48 entlang der Führung 46 in Richtung des Schlagankers 40 beschleunigt. Hierbei wird mittels des als Trennelement 46 wirkenden Stempels 48 die Steuerleitung 24 in dem Bereich zwischen dem Stempel 48 und dem Gehäuse 52 abgeschert und folglich durchtrennt, was aufgrund der Bewegung des Bereichs der Steuerleitung 24, der sich innerhalb der Bohrung 54 befindet, in Richtung des Schlagankers 40 und einer stabilen Position des übrigen Bereichs der Steuerleitung 24 in Verbindung mit den vergleichsweise scharfen Kanten des Stempels 48 und des Gehäuses 52 erfolgt. In Folge dessen wird eine Bestromung der Spule 38 unterbrochen und der Schlaganker 40 mittels einer hier nicht dargestellten Feder in Richtung des Lochs 42 bewegt, wobei die Relaiskontakte 20 geöffnet werden. Die Feder ist der Bestandteil des Relais 16, der bei einem Stromlosschalten des Relais 16 die Relaiskontakte 20 in einen geöffneten Zustand überführt. Zusätzlich wird der Schlaganker 40 bei Auftreten des Airbag-Signals 36 mittels des Stempels 48 in Richtung des Lochs 42 beschleunigt, was eine Öffnungsbewegung der Relaiskontakte 20 beschleunigt und eine Verschmelzung zwischen diesen aufhebt, sofern diese aufgrund eines Überstroms besteht.

In Fig. 4a ist eine weitere Ausführungsform des Hochvolt-Bordnetzes 2 mit dem Verbrauchernetz 6, der Hochvolt-Batterie 4 und der elektrischen Leitung 8 gezeigt, die ebenfalls den Überstromschutz 12 aufweist. Im Vergleich zu der in Fig. 1 gezeigten Variante des Hochvolt-Bordnetzes 2 ist der Schnellabschalter 14 mit dem die Relaiskontakte 20 aufweisenden Relais 16 durch ein weiteres Relais 10 ersetzt worden. Folglich weist die elektrische Leitung 8 in jedem der beiden Leiter 8a, 8b jeweils ein Relais 10 auf, die mittels der Steuersignale 26 beaufschlagt sind, die mittels des Gaspedals oder des Zündschlosses des Kraftfahrzeugs erstellt sind. Die elektrische Leitung 8 umfasst ferner eine Kurzschlussbrücke 58, mittels derer die beiden Leiter 8a, 8b der elektrischen Leitung 8 miteinander kontaktiert sind, und die folglich parallel zu dem Verbrauchernetz 6 geschaltet ist. Die beiden Relais 10 sind hierbei zwischen der Kurzschlussbrücke 58 und dem Verbrauchernetz 6 angeordnet, wohingegen der Überstromschutz 12 sich batterieseitig der Kurzschlussbrücke 58 befindet. Die Kurzschlussbrücke 58 umfasst den Schnellabschalter 14, der einen Halbleiterschalter 60 in Form eines TRIACs und eine Steuerung 62 umfasst. Die Steuerung 62 ist hierbei mit dem Airbag-Signal 36 beaufschlagt.

Im Normalbetrieb des Hochvolt-Bordnetzes 2 ist der Halbleiterschalter 60 geöffnet und folglich die Kurzschlussbrücke 58 nicht leitend. Bei Auftreten des Airbag-Signals 36 wird der Halbleiterschalter 60 mittels der Steuerung 62 in einen leitenden Zustand überführt. Folglich wird in diesem Fall mittels der Kurzschlussbrücke 58 ein elektrischer Strom geführt. Hierbei ist der elektrische Widerstand der Kurzschlussbrücke 58 geringer als der elektrische Widerstand des Verbrauchernetzes 6, sodass die mittels der Batterie 4 bereitgestellte elektrische Energie im Wesentlichen lediglich über die Kurzschlussbrücke 58 und nicht in das Verbrauchernetz 6 fließt. In Folge des Kurzschlussstromes, der durch den Stromkreis, der aus der Batterie 4, jeweils einem Teil der beiden Leiter 8a, 8b, dem Überstromschutz 12 und der Kurzschlussbrücke 58 gebildet ist, fließt, wird der Überstromschutz 12 ausgelöst und folglich ein Stromfluss über die elektrische Leitung 8 unterbunden. In Folge dessen ist das Verbrauchernetz 6 von der Hochvolt-Batterie 4 galvanisch getrennt.

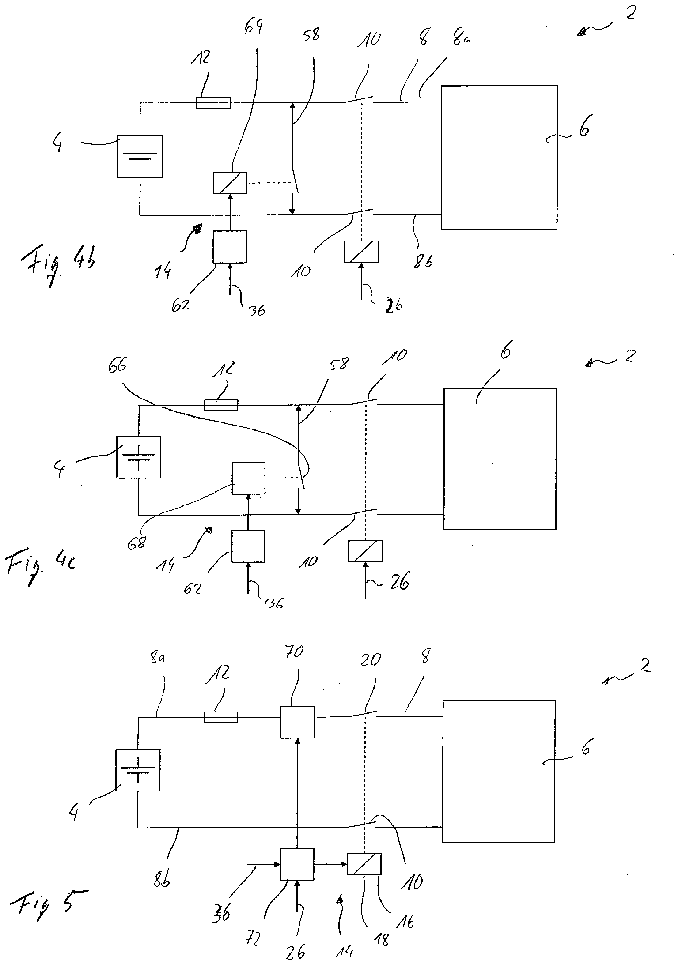

In Fig. 4b ist im Vergleich zur vorgehend gezeigten Variante des Hochvolt-Bordnetzes 2 der Halbleiterschalter 60 durch ein Relais 64 ersetzt und die Steuerung 62 auf eine Ansteuerung des Relais 64 anstatt des Halbleiterschalters 60 modifiziert. Ansonsten ist die Funktionsweise des Schnellabschalters 14 und des Überstromschutzes 12 in Verbindung mit der Kurzschlussbrücke 58 und dem Airbag-Signal 36 wie in Fig. 4a beschrieben.

In Fig. 4c ist bei einer weiteren Ausführungsform des Hochvolt-Bordnetzes 2 im Vergleich zu der in Fig. 4b gezeigten Variante der Schnellabschalter 14 ersetzt. Der Schnellabschalter14 weist wiederum die mit dem Airbag-Signal 36 beaufschlagte Steuerung 62 auf. Mittels dieser wird jedoch ein auf zwei Schaltkontakte 66 wirkender Antrieb 68 gesteuert. Der Antrieb 68 ist pyrotechnisch ausgeführt, so dass bei einem Auftreten des Airbag-Signals 36 eine Sprengladung gezündet und die beiden Schaltkontakte 66 miteinander in Verbindung gebracht werden, was zu einem leitenden Zustand der Kurzschlussbrücke 58 führt.

In Fig. 5 ist eine letzte Ausführungsform des Hochvolt-Bordnetzes 2 gezeigt, der mit Ausnahme des Schnellabschalters 14 der in Fig. 1 gezeigten Ausführungsform entspricht. Der hier dargestellte Schnellabschalter 14 umfasst ebenfalls das Relais 16 mit dem magnetischen Antrieb 18 und den Relaiskontakten 20, die in Wirkverbindung mit dem magnetischen Antrieb 18 stehen. Der Schnellabschalter 14 weist ferner einen Halbleiterschalter 70 auf, der in Reihe zu den Relaiskontakten 20 und dem Überstromschutz 12 geschalten und zwischen diesen beiden angeordnet ist. Ferner umfasst der Schnellabschalter 14 eine Steuerung 72, die mit den Steuersignalen 26 und dem Airbag-Signal 36 beaufschlagt ist. Der Halbleiterschalter 70 befindet sich bei ordnungsgemäßem Betrieb des Hochvolt-Bordnetzes 2 stets in einem geschlossenen Zustand und ist folglich stromführend. Aufgrund der auftretenden Steuersignale 26 wird mittels der Steuerung 72 der magnetische Antrieb 18 bestromt und folglich die Relaiskontakte 20 betrieben. Bei Auftreten des Airbag-Signals 36 wird mittels der Steuerung 72 der Halbleiterschalter 70 geschalten und folglich ein Stromfluss über diesen unterbrochen. Zusätzlich wird der magnetische Antrieb 18 betätigt und die Relaiskontakte 20 voneinander getrennt. Aufgrund der Ansteuerung des Halbleiterschalters 70 ist eine vergleichsweise schnelle Beendigung eines Stromflusses über die elektrische Leitung 8 ermöglicht, wohingegen aufgrund des hierzu vergleichsweise langsamen Öffnens der Relaiskontakte 20 zusätzlich eine galvanische Trennung des Verbrauchernetzes 6 von der Hochvolt-Batterie 4 erreicht wird. Folglich wird mittels des Halbleiterschalters 14 zunächst eine vergleichsweise schnelle Stromunterbrechung und im Anschluss hieran eine galvanische Trennung ermöglicht.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

## Patentansprüche

1. Schnellabschalter (14), insbesondere eines Kraftfahrzeugs, der ein Relais (16) mit einem magnetischen Antrieb (18) und einen pyrotechnischen Zusatzantrieb (28) umfasst, wobei der Schnellabschalter einen Relaisantrieb (22) umfasst, **dadurch gekennzeichnet, dass** der magnetische Antrieb (18) eine mit dem Relaisantrieb (22) verbundene Steuerleitung (24) und der Zusatzantrieb (28) eine Ansteuerleitung (32) und ein Trennelement (56) zur Durchtrennung der Steuerleitung (24) aufweist.

## Claims

1. Quick-break switch (14), in particular for a motor vehicle, that comprises a relay (16) with a magnetic drive (18) and a pyrotechnic additional drive (28), wherein the quick-break switch comprises a relay drive (22), **characterized in that** the magnetic drive (18) has a control line (24) connected to the relay drive (22) and the additional drive (28) has an actuation line (32) and a disconnection element (56) for severing the control line (24).

## Revendications

1. Dispositif d'arrêt d'urgence (14), en particulier pour un véhicule automobile, comprenant un relais (16) pourvu d'un entraînement magnétique (18) et d'un entraînement auxiliaire pyrotechnique (28), dans lequel le dispositif d'arrêt d'urgence comprend un entraînement à relais (22),
**caractérisé en ce que** l'entraînement magnétique (18) présente une ligne de commande (24) reliée à l'entraînement à relais (22), et l'entraînement auxiliaire (28) présente une ligne de pilotage (32) et un élément séparateur (56) pour séparer la ligne de commande (24).
